# FASCICULE DE BREVET EUROPEEN

(11) **EP 3 083 359 B1**
(45) Date de publication et mention de la délivrance du brevet: **28.02.2018**
(21) Numéro de dépôt: 14812584.2
(22) Date de dépôt: 14.11.2014
(51) Int. Cl.: B60W 30/188, B60W 10/30

(54) **DÉCONNEXION TEMPORAIRE D'ACCESSOIRES AU DÉCOLLAGE D'UN VÉHICULE AUTOMOBILE**
ZEITWEILIGE ABKOPPLUNG VON ZUBEHÖRTEILEN WÄHREND DER BESCHLEUNIGUNG AUS DEM STILLSTAND EINES KRAFTFAHRZEUGS
TEMPORARY DISCONNECTION OF ACCESSORIES DURING THE ACCELERATION FROM REST OF A MOTOR VEHICLE

(30) Priorité: 18.12.2013 FR 1362881
(43) Date de publication de la demande: 26.10.2016
(73) Titulaire: Renault s.a.s., 92100 Boulogne-Billancourt (FR)
(72) Inventeur: CORNET, Pierrick, F-91150 Morigny Champigny (FR); FASOLO, Bertrand, F-92160 Antony (FR)
(86) Numéro de dépôt international: PCT/FR2014/052916
(87) Numéro de publication internationale: WO 2015/092178

(56) Documents cités:
- WO-A1-2012/079796
- DE-A1-102009 026 625
- DE-A1-102010 045 015
- FR-A1- 2 979 293
- US-A1- 2008 179 119
- US-A1- 2012 029 749

## Description

### Domaine technique de l'invention

L'invention concerne un procédé de gestion d'un véhicule automobile comportant au moins un moteur d'entraînement ayant un arbre de sortie accouplé à et mettant en mouvement la chaine cinématique de traction du véhicule.

L'invention a pour objet également un véhicule automobile comprenant les moyens logiciels et matériels de mise en oeuvre du procédé de gestion.

### État de la technique

Dans le but de diminuer la consommation des véhicules automobiles, la tendance actuelle est de diminuer la cylindrée des moteurs thermiques, connue sous la dénomination « downsizing » en terminologie anglo-saxonne. L'ensemble est compensé par la mise en place d'au moins un turbocompresseur associé au moteur thermique. Parallèlement, les rapports de boîte de vitesse sont rallongés.

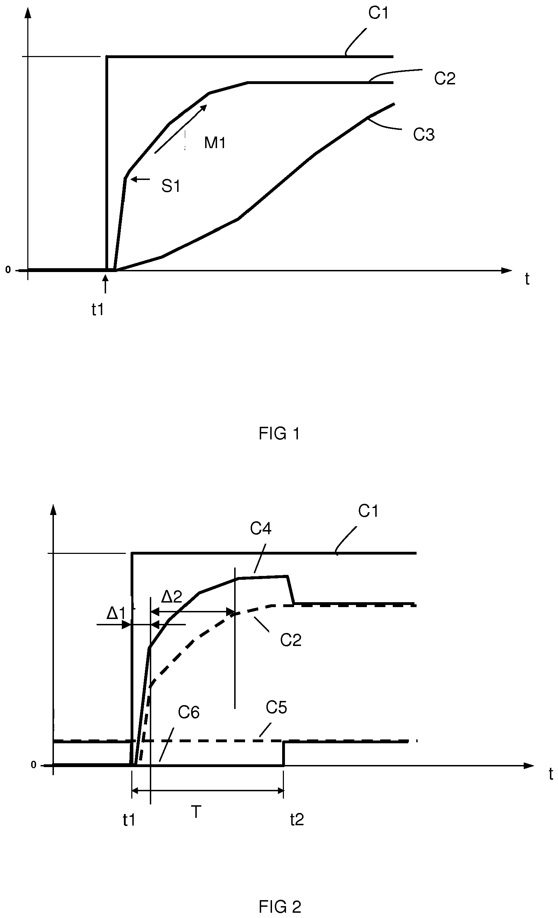

Par contre, la capacité de décollage des véhicules, c'est-à-dire sa capacité de démarrage depuis une vitesse nulle, se dégrade. Cet inconvénient est d'autant plus présent que le décollage est réalisé sur une route en pente. Un procédé de gestion d'un véhicule automobile tel que décrit dans le préambule de la revendication 1 est connu de WO 2012/079796 A1. La figure 1 illustre le phénomène de décollage. La courbe C1 représente le pourcentage d'enfoncement de la pédale d'accélérateur d'un véhicule en fonction du temps, qui se présente par un enfoncement mis en oeuvre à l'instant t1 qui correspond au moment de la volonté du décollage de la part du conducteur du véhicule. Cet enfoncement est de l'ordre de 100% sous la forme d'un créneau droit dans le cas d'un décollage sur une route en pente. La courbe C3 représente l'évolution de la vitesse du véhicule qui en résulte. La courbe C2 représente l'évolution du couple effectif délivré par le moteur d'entraînement du véhicule, correspondant au couple transmissible à la chaine cinématique de traction. Dans les premiers instants du décollage en partant de l'instant t1, le couple disponible correspond uniquement au couple délivré par le moteur thermique en phase dite « phase atmosphérique », le turbocompresseur étant non opérationnel dans les bas régimes du moteur. Le couple délivré par le moteur thermique est directement lié, notamment sensiblement proportionnelle, à la cylindrée du moteur thermique. Il augmente progressivement à un seuil de couple atmosphérique S1 où le turbocompresseur entre en action. La pression de suralimentation croît alors progressivement, favorisant la montée du couple disponible repérée M1 à l'issue de laquelle le couple délivré par le moteur d'entraînement plafonne à sa valeur maximale. Ce résultat est atteint au bout d'une période classiquement comprise entre 1 et 3 secondes.

Pour le décollage, les principes expliqués ci-dessus sont importants, notamment la phase temporelle qui débute à l'instant t1 et qui se termine au niveau ou légèrement après le passage du seuil S1. Il apparait que le couple disponible à chaque instant en vertu de la courbe C2 durant la montée progressive qui débute à l'instant t1 peut s'avérer insuffisant pour conférer de bonnes prestations de conduite et un bon agrément perçu par le conducteur.

Il convient de trouver une solution améliorant les capacités de décollage du véhicule, particulièrement dans les situations délicates telles que le décollage sur une route en pente. Notamment, une solution consiste à tenter d'augmenter le couple disponible pour la chaine cinématique de traction durant la phase où le turbocompresseur n'est pas encore opérationnel.

Les solutions pour accroître le couple moteur en phase atmosphérique ne sont pas très nombreuses et en général elles sont déjà exploitées. Elles passent par une optimisation du rendement volumétrique via par exemple une ligne d'admission plus perméable ou un ajustement du décalage des arbres à cames, par des modifications de réglages de la combustion via par exemple l'ajustement de l'avance à l'allumage.

Les solutions les plus efficaces consistent à avoir un système de suralimentation auxiliaire au turbocompresseur et qui réponde quasi-instantanément à la demande de couple. Il s'agit par exemple d'un compresseur volumétrique ou d'un compresseur assisté électriquement. Mais ces solutions ont l'inconvénient d'être très coûteuses et difficiles à mettre en oeuvre en fonction du véhicule et en termes d'encombrement ou d'architecture électronique.

### Objet de l'invention

Le but de la présente invention est de proposer une solution de gestion qui remédie aux inconvénients listés ci-dessus.

Notamment, un objet de l'invention est de fournir une solution de gestion qui permette d'améliorer les capacités de décollage du véhicule, particulièrement dans les situations délicates telles que le décollage sur une route en pente.

Un autre objet de l'invention est de fournir une solution de gestion, peu onéreuse et encombrante, facilement adaptable et conviviale et qui permette d'augmenter le couple disponible pour la chaine cinématique de traction durant la phase où le turbocompresseur n'est pas encore opérationnel, c'est-à-dire durant la phase où le couple est produit grâce au seul remplissage naturel en air du moteur à la pression atmosphérique.

Ces objets peuvent être atteints par un procédé de gestion d'un véhicule automobile comportant au moins un moteur d'entraînement ayant un arbre de sortie accouplé à et mettant en mouvement la chaine cinématique de traction du véhicule, qui comprend une étape de passage d'une première configuration où au moins un accessoire distinct de la chaine cinématique de traction est accouplé à, et entrainé par, ledit arbre de sortie, à une deuxième configuration temporaire où ledit au moins un accessoire est déconnecté dudit arbre de sortie, mise en oeuvre durant une phase d'augmentation du couple délivré en sortie par ledit au moins un moteur d'entraînement.

Selon un mode de mise en oeuvre, dans la deuxième configuration temporaire, ledit au moins un accessoire est désaccouplé mécaniquement dudit arbre de sortie et n'est pas entraîné par lui. Alternativement, dans la deuxième configuration temporaire, ledit au moins un accessoire est désactivé électriquement.

Le procédé de gestion peut comprendre une étape de sollicitation d'une pédale d'accélérateur du véhicule associée à une demande de décollage du véhicule correspondant au passage d'une phase d'arrêt à vitesse nulle du véhicule à une phase de mise en mouvement du véhicule, ladite étape de sollicitation commandant ladite phase d'augmentation du couple délivré en sortie par ledit au moins un moteur d'entraînement.

La phase d'augmentation du couple délivré en sortie par ledit au moins un moteur d'entraînement peut comprendre le passage du couple délivré d'une valeur nulle à une valeur correspondant au couple maximal que ledit au moins un moteur d'entraînement peut délivrer.

De préférence, ledit au moins un moteur d'entraînement comprenant un moteur thermique dont les gaz d'admission sont suralimentés par au moins un turbocompresseur, la phase d'augmentation du couple délivré comprend une première phase durant laquelle l'augmentation du couple délivré est créée uniquement par le moteur thermique et durant laquelle le turbocompresseur est dans un état inactif et une deuxième phase durant laquelle l'augmentation du couple délivré est créée conjointement par le moteur thermique et par le turbocompresseur occupant un état actif et l'étape de passage de la première configuration à la deuxième configuration est mise en oeuvre durant tout ou partie de ladite première phase et durant tout ou partie de ladite deuxième phase. Selon un mode de réalisation, le procédé comporte alors une étape de détermination de la pente de la voie sur laquelle se trouve le véhicule, la pente déterminée ayant une influence sur la mise en oeuvre de l'étape de passage de la première configuration à la deuxième configuration. Notamment, l'étape de passage de la première configuration à la deuxième configuration est de préférence mise en oeuvre si la pente déterminée est supérieure à une valeur seuil prédéterminée.

La pente du véhicule peut être déterminée, notamment par calcul, par le système de contrôle dynamique de trajectoire qui équipe le véhicule.

Suite à la mise en oeuvre de l'étape de passage de la première configuration à la deuxième configuration temporaire, le procédé peut comprendre une étape de passage de la deuxième configuration à la première configuration commandée lorsque une temporisation prédéterminée s'est écoulée depuis le début de la mise en oeuvre de l'étape de passage de la première configuration à la deuxième configuration ou lorsque, durant la deuxième configuration, le couple délivré en sortie par ledit au moins un moteur d'entraînement devient supérieur à un seuil prédéterminé.

Selon un mode de réalisation, ledit au moins un accessoire est choisi parmi la liste suivante : un compresseur de climatisation, un alternateur, une pompe à eau débrayable.

Un véhicule automobile pourra comprendre les moyens logiciels et matériels de mise en oeuvre du procédé décrit précédemment.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 précédemment décrite représente, en fonction du temps t en secondes, le pourcentage d'enfoncement de la pédale d'accélérateur pour la courbe C1, le couple effectif délivré par le moteur d'entraînement du véhicule pour la courbe C2 (qui correspond au couple transmissible à la chaine cinématique de traction), la vitesse du véhicule pour la courbe C3, dans le cas d'un décollage du véhicule sur une route en pente,
- la figure 2 représente, en fonction du temps t en secondes, la courbe C1 précédente, la courbe C2 précédente représentée en pointillés en comparaison de l'évolution du couple transmissible à la chaine cinématique de traction selon la courbe C4 lorsque la gestion selon l'invention est appliquée, l'évolution du couple consommé par les accessoires autres que la chaine cinématique de traction et déconnectés dans la gestion selon l'invention respectivement lorsque cette gestion n'est pas mise en oeuvre pour la courbe C5 et lorsque cette gestion est mise en oeuvre pour la courbe C6.

### Description de modes préférentiels de l'invention

De manière générale, l'invention qui va être décrite en référence à la figure 2 concerne un procédé de gestion d'un véhicule automobile comportant au moins un moteur d'entraînement ayant un arbre de sortie accouplé à la chaine cinématique de traction et la mettant en mouvement afin d'entrainer les roues motrices. Ce moteur d'entraînement comprend notamment un moteur thermique, auquel un turbocompresseur peut être associé afin de comprimer les gaz admis dans les cylindres du moteur thermique. Le moteur thermique peut également être associé ou non à au moins un moteur électrique dans le cadre d'une traction hybride. L'invention porte aussi sur un véhicule automobile comprenant les moyens logiciels et matériels de mise en oeuvre du procédé de gestion décrit dans ce document.

Essentiellement, le procédé de gestion comprend une étape de passage d'une première configuration où au moins un accessoire distinct de la chaine cinématique de traction est accouplé à l'arbre de sortie et entrainé par l'arbre de sortie, à une deuxième configuration temporaire où ledit au moins un accessoire est déconnecté de l'arbre de sortie, cette étape étant mise en oeuvre durant une phase d'augmentation du couple délivré en sortie par ledit au moins un moteur d'entraînement.

Selon un mode de réalisation, ledit au moins un accessoire est choisi parmi la liste suivante : un compresseur de climatisation, un alternateur, une pompe à eau débrayable et embrayable. Il s'agit de manière plus générale des accessoires accouplés à l'arbre de sortie en vue de leur entrainement et qui sont de ce fait consommateurs d'une partie du couple délivré par le moteur d'entrainement. Cette partie du couple est directement imputée au couple transmissible à la chaine cinématique de traction qui est diminué en conséquence.

La déconnexion de l'accessoire peut consister, dans le cas d'un compresseur de climatisation ou d'une pompe à eau débrayable et embrayable, en un désaccouplement mécanique. Dans le cas d'un alternateur, il peut s'agir d'une désactivation électrique, l'alternateur n'étant pas mis en charge pour alimenter des consommateurs d'énergie tels que la batterie du véhicule.

Autrement dit, il est mis en oeuvre une étape d'arrêt temporaire du fonctionnement d'au moins un accessoire distinct de la chaine cinématique de traction et préalablement accouplé à l'arbre de sortie et entrainé par l'arbre de sortie, d'une manière permettant qu'il ne prélève pas d'énergie à l'arbre de sortie durant la phase d'augmentation du couple délivré en sortie par ledit au moins un moteur d'entraînement.

Cette déconnexion temporaire a pour effet immédiat d'augmenter le couple disponible au niveau de l'arbre de sortie et directement transmissible à la chaine cinématique. Autrement dit, le couple transmissible à la chaine cinématique devient directement égal, au rendement près, au couple délivré par le moteur d'entrainement.

Notamment dans la première phase d'un décollage au cours de laquelle le turbocompresseur n'est pas actif et le couple délivré n'est produit que par le moteur thermique fonctionnant en phase atmosphérique, le couple transmissible à la chaine cinématique est égal, au rendement près, au couple produit par le moteur thermique. Au contraire dans l'art antérieur, en l'absence de mise en oeuvre de la solution de gestion décrite dans ce document, le couple transmissible à la chaine cinématique est nettement inférieur en étant égal à la différence entre le couple produit par le moteur d'entrainement, notamment par le moteur thermique durant la phase purement atmosphérique, et le couple consommé par les accessoires déconnectés durant l'étape de passage de la première configuration à la deuxième configuration dans la solution de gestion décrite dans ce document.

Selon un mode de réalisation, le procédé de gestion comprend une étape de sollicitation d'une pédale d'accélérateur du véhicule associée à une demande de décollage du véhicule, cette étape de sollicitation commandant la phase d'augmentation du couple délivré en sortie par ledit au moins un moteur d'entraînement. La demande de décollage correspond au passage d'une phase d'arrêt à vitesse nulle du véhicule à une phase de mise en mouvement du véhicule.

Comme indiqué précédemment, dans le cas d'une demande de décollage réalisée à l'instant t1 notamment sur une route en pente, voire avec une forte pente, s'accompagne en référence à la courbe C1 du passage du pourcentage d'enfoncement de la pédale d'une valeur proche de 0% à un pourcentage d'enfoncement sensiblement égal à 100%. La phase d'augmentation du couple délivré en sortie par ledit au moins un moteur d'entraînement comprend alors le passage du couple délivré d'une valeur nulle à une valeur correspondant au couple maximal que ledit au moins un moteur d'entraînement peut délivrer.

Dans le cas particulièrement visé où ledit au moins un moteur d'entraînement comprend un moteur thermique dont les gaz d'admission sont suralimentés par au moins un turbocompresseur, la phase d'augmentation du couple délivré comprend une première phase Δ1 durant laquelle l'augmentation du couple délivré est créée uniquement par le moteur thermique en phase atmosphérique et durant laquelle le turbocompresseur est dans un état inactif suivie d'une deuxième phase Δ2 durant laquelle l'augmentation du couple délivré est due à la suralimentation progressive du moteur, qui permet d'accroître la densité et donc la masse d'air admise dans les cylindres du moteur. Ces augmentations progressives du couple dans le cadre de la gestion selon l'invention sont représentées par la courbe C4 qu'il convient de comparer à la courbe C2 correspondant à une gestion sans déconnexion des accessoires. L'étape de passage de la première configuration à la deuxième configuration est mise en oeuvre durant tout ou partie de cette première phase Δ1 et durant tout ou partie de cette deuxième phase Δ2.

En particulier, l'étape de passage de la première configuration à la deuxième configuration est mise en oeuvre à l'instant t1, c'est-à-dire au moment où la demande de décollage est réalisée et au moment du début de la première phase Δ1.

Sur la figure 2, la courbe C5 illustre l'évolution dans le temps t du couple consommé par les accessoires autres que la chaine cinématique de traction et normalement accouplés à l'arbre de traction lorsque l'étape de passage de la première configuration à la deuxième configuration n'est pas réalisée. Le couple consommé par ces accessoires correspond à la somme des couples consommés individuellement par chacun de ces accessoires. Ce couple consommé est sensiblement constant dans le temps, en particulier durant les première et deuxième phases Δ1 et Δ2.

La courbe C6 l'évolution dans le temps t du couple consommé par ces accessoires autres que la chaine cinématique de traction dans le cadre de la gestion selon l'invention, prévoyant une déconnexion à l'instant t1. A l'instant t1, le couple consommé par ces accessoires évoluent de la courbe C5 vers une valeur égale à 0 Nm. La courbe C6 reste nulle tant que la deuxième configuration est appliquée.

Bien que cela ne soit pas limitatif du champ d'application de l'invention, le procédé peut de préférence comporter une étape de détermination de la pente de la voie sur laquelle se trouve le véhicule, la pente déterminée ayant une influence sur la mise en oeuvre de l'étape de passage de la première configuration à la deuxième configuration. L'étape de passage de la première configuration à la deuxième configuration est de préférence mise en oeuvre si la pente déterminée est supérieure à une valeur seuil prédéterminée, par exemple 10%, de telle façon à maintenir la capacité de décollage du véhicule au même niveau que sur le plat.

La pente du véhicule peut être déterminée par tout moyen adapté et en relation avec l'unité de contrôle électronique qui assure la gestion selon l'invention. Notamment, la pente peut être déterminée, notamment par calcul ou éventuellement par mesure, par le système de contrôle dynamique de trajectoire qui équipe le véhicule aussi connu sous l'appellation « ESP » pour « Electronic Stability Program » en terminologie anglo-saxonne.

Enfin, suite à la mise en oeuvre de l'étape de passage de la première configuration à la deuxième configuration temporaire, le procédé comprend une étape de passage de la deuxième configuration à la première configuration commandée lorsque une temporisation prédéterminée s'est écoulée depuis le début de la mise en oeuvre de l'étape de passage de la première configuration à la deuxième configuration ou lorsque, durant la deuxième configuration, le couple délivré en sortie par ledit au moins un moteur d'entraînement devient supérieur à un seuil prédéterminé.

La figure 2 illustre le cas de la mise en oeuvre d'une temporisation prédéterminée notée T. A l'instant t2 où le passage de la deuxième configuration à la première configuration est réalisé, les accessoires consommateurs de couple précédemment et temporairement déconnectés durant tout ou partie des phases Δ1 et/ou Δ2 sont alors reconnectés à l'arbre de sortie du moteur d'entrainement en vue de leur entrainement. A cet instant t2, ils redeviennent consommateurs d'une partie du couple délivré et le couple transmissible à la chaine cinématique de traction diminue immédiatement pour rejoindre la courbe C2.

L'étape de passage de la deuxième configuration à la première configuration peut aussi être mise en oeuvre à la fin de la première phase Δ1, au début de la deuxième phase Δ2 ou à la fin de la deuxième phase Δ2. Dans le cas particulier de la figure 2, l'instant t2 correspond à la fin de la deuxième phase Δ2.

A l'instant t2, le couple consommé par les accessoires déconnectés augmente immédiatement, en référence à la courbe C6 qui rejoint en même temps la courbe C5.

Entre les instants t1 et t2, la différence entre les courbes C5 et C6, qui correspond au couple économisé temporairement en étant non consommé par les accessoires déconnectés du fait de leur déconnexion, correspond à la différence entre les courbes C4 et C2. Le fait que la courbe C6 soit située en dessous de la courbe C5 entre les instants t1 et t2 implique que la courbe C4 est située au-dessus de la courbe C2 entre ces mêmes instants.

La solution de gestion décrite dans ce document permet d'améliorer les capacités de décollage du véhicule, particulièrement dans les situations délicates telles que le décollage sur une route en pente, notamment fortement inclinée.

La solution de gestion décrite dans ce document, peu onéreuse et peu encombrante, facilement adaptable et conviviale, permet d'augmenter le couple disponible pour la chaine cinématique de traction, en particulier durant la phase où le turbocompresseur n'est pas encore opérationnel et où seul le moteur thermique délivre le couple.

En fonction de la nature de l'accessoire à déconnecter temporairement et de la nature de sa connexion à l'arbre de sortie, le dispositif de connexion/déconnexion temporaire entre l'accessoire et l'arbre de sortie pourra être de toute nature, par exemple par poulie débrayable, par disques frottant, par galets ou équivalents dans le cas d'un accouplement mécanique.

## Revendications

1. Procédé de gestion d'un véhicule automobile comportant au moins un moteur d'entraînement ayant un arbre de sortie accouplé à et mettant en mouvement la chaine cinématique de traction du véhicule, le procédé de gestion comprenant une étape de passage d'une première configuration où au moins un accessoire distinct de la chaine cinématique de traction est accouplé à, et entrainé par, ledit arbre de sortie, à une deuxième configuration temporaire où ledit au moins un accessoire est déconnecté dudit arbre de sortie, le procédé de gestion étant **caractérisé en ce que** la deuxième configuration est mise en oeuvre durant une phase d'augmentation du couple délivré en sortie par ledit au moins un moteur d'entraînement.

2. Procédé de gestion selon la revendication 1, **caractérisé en ce que** dans la deuxième configuration temporaire, ledit au moins un accessoire est désaccouplé mécaniquement dudit arbre de sortie et n'est pas entraîné par lui.

3. Procédé de gestion selon la revendication 1, **caractérisé en ce que** dans la deuxième configuration temporaire, ledit au moins un accessoire est désactivé électriquement.

4. Procédé de gestion selon lune quelconque des revendications 1 à 3, **caractérisé en ce qu'**il comprend une étape de sollicitation d'une pédale d'accélérateur du véhicule associée à une demande de décollage du véhicule correspondant au passage d'une phase d'arrêt à vitesse nulle du véhicule à une phase de mise en mouvement du véhicule, ladite étape de sollicitation commandant ladite phase d'augmentation du couple délivré en sortie par ledit au moins un moteur d'entraînement.

5. Procédé de gestion selon l'une quelconque des revendications précédentes, **caractérisé en ce que** la phase d'augmentation du couple délivré en sortie par ledit au moins un moteur d'entraînement comprend le passage du couple délivré d'une valeur nulle à une valeur correspondant au couple maximal que ledit au moins un moteur d'entraînement peut délivrer.

6. Procédé de gestion selon l'une quelconque des revendications précédentes, **caractérisé en ce que** ledit au moins un moteur d'entraînement comprenant un moteur thermique dont les gaz d'admission sont suralimentés par au moins un turbocompresseur, la phase d'augmentation du couple délivré comprend une première phase durant laquelle l'augmentation du couple délivré est créée uniquement par le moteur thermique et durant laquelle le turbocompresseur est dans un état inactif et une deuxième phase durant laquelle l'augmentation du couple délivré est créée conjointement par le moteur thermique et par le turbocompresseur occupant un état actif et **en ce que** l'étape de passage de la première configuration à la deuxième configuration est mise en oeuvre durant tout ou partie de ladite première phase et durant tout ou partie de ladite deuxième phase.

7. Procédé de gestion selon l'une quelconque des revendications précédentes, **caractérisé en ce qu'**il comporte une étape de détermination de la pente de la voie sur laquelle se trouve le véhicule, la pente déterminée ayant une influence sur la mise en oeuvre de l'étape de passage de la première configuration à la deuxième configuration.

8. Procédé de gestion selon la revendication 7, **caractérisé en ce que** l'étape de passage de la première configuration à la deuxième configuration est mise en oeuvre si la pente déterminée est supérieure à une valeur seuil prédéterminée.

9. Procédé de gestion selon l'une des revendications 7 ou 8, **caractérisé en ce que** la pente du véhicule est déterminée, notamment est calculée, par le système de contrôle dynamique de trajectoire qui équipe le véhicule.

10. Procédé de gestion selon l'une quelconque des revendications précédentes, **caractérisé en ce que** suite à la mise en oeuvre de l'étape de passage de la première configuration à la deuxième configuration temporaire, le procédé comprend une étape de passage de la deuxième configuration à la première configuration commandée lorsque une temporisation prédéterminée s'est écoulée depuis le début de la mise en oeuvre de l'étape de passage de la première configuration à la deuxième configuration ou lorsque, durant la deuxième configuration, le couple délivré en sortie par ledit au moins un moteur d'entraînement devient supérieur à un seuil prédéterminé.

11. Procédé de gestion selon l'une quelconque des revendications précédentes, **caractérisé en ce que** ledit au moins un accessoire est choisi parmi la liste suivante : un compresseur de climatisation, un alternateur, une pompe à eau débrayable.

12. Véhicule automobile comprenant les moyens logiciels et matériels de mise en oeuvre du procédé selon l'une quelconque des revendications précédentes.

## Patentansprüche

1. Verfahren zum Management eines Kraftfahrzeugs, das wenigstens einen Antriebsmotor umfasst, der eine Abtriebswelle aufweist, die mit der kinematischen Antriebskette des Fahrzeugs gekoppelt ist und diese in Bewegung versetzt, wobei das Verfahren zum Management einen Schritt des Übergangs von einer ersten Konfiguration, in der wenigstens ein von der kinematischen Antriebskette verschiedenes Zubehörteil mit der Abtriebswelle gekoppelt ist und von ihr angetrieben wird, zu einer zeitweiligen zweiten Konfiguration, in der das wenigstens eine Zubehörteil von der Abtriebswelle getrennt ist, umfasst, wobei das Verfahren zum Management **dadurch gekennzeichnet ist, dass** die zweite Konfiguration während einer Phase der Erhöhung des Drehmoments angewendet wird, das von dem wenigstens einen Antriebsmotor am Abtrieb geliefert wird.

2. Verfahren zum Management nach Anspruch 1, **dadurch gekennzeichnet, dass** in der zeitweiligen zweiten Konfiguration das wenigstens eine Zubehörteil mechanisch von der Abtriebswelle abgekoppelt ist und nicht von ihr angetrieben wird.

3. Verfahren zum Management nach Anspruch 1, **dadurch gekennzeichnet, dass** in der zeitweiligen zweiten Konfiguration das wenigstens eine Zubehörteil elektrisch deaktiviert ist.

4. Verfahren zum Management nach einem der Ansprüche 1 bis 3, **dadurch gekennzeichnet, dass** es einen Schritt der Beaufschlagung eines Fahrpedals des Fahrzeugs umfasst, der einem Befehl zum Anfahren des Fahrzeugs zugeordnet ist, das dem Übergang von einer Haltephase bei Geschwindigkeit null des Fahrzeugs zu einer Phase des Inbewegungsetzens des Fahrzeugs entspricht, wobei der Schritt der Beaufschlagung die Phase der Erhöhung des Drehmoments auslöst, das von dem wenigstens einen Antriebsmotor am Abtrieb geliefert wird.

5. Verfahren zum Management nach einem der vorhergehenden Ansprüche, **dadurch gekennzeichnet, dass** die Phase der Erhöhung des Drehmoments, das von dem wenigstens einen Antriebsmotor am Abtrieb geliefert wird, den Übergang des gelieferten Drehmoments von einem Wert null zu einem Wert umfasst, der dem maximalen Drehmoment entspricht, welches der wenigstens eine Antriebsmotor liefern kann.

6. Verfahren zum Management nach einem der vorhergehenden Ansprüche, **dadurch gekennzeichnet, dass** der wenigstens eine Antriebsmotor einen Verbrennungsmotor umfasst, dessen Einlassgase von wenigstens einem Turbolader aufgeladen werden, wobei die Phase der Erhöhung des gelieferten Drehmoments eine erste Phase umfasst, während der die Erhöhung des gelieferten Drehmoments ausschließlich durch den Verbrennungsmotor erzeugt wird und während der sich der Turbolader in einem inaktiven Zustand befindet, und eine zweite Phase, während der die Erhöhung des gelieferten Drehmoments durch den Verbrennungsmotor und den in einem aktiven Zustand befindlichen Turbolader zusammen erzeugt wird, und dadurch, dass der Schritt des Übergangs von der ersten Konfiguration zur zweiten Konfiguration während der gesamten ersten Phase oder eines Teils derselben und während der gesamten zweiten Phase oder eines Teils derselben durchgeführt wird.

7. Verfahren zum Management nach einem der vorhergehenden Ansprüche, **dadurch gekennzeichnet, dass** es einen Schritt der Bestimmung der Neigung der Fahrbahn umfasst, auf der sich das Fahrzeug befindet, wobei die bestimmte Neigung einen Einfluss auf die Durchführung des Schrittes des Übergangs von der ersten Konfiguration zur zweiten Konfiguration hat.

8. Verfahren zum Management nach Anspruch 7, **dadurch gekennzeichnet, dass** der Schritt des Übergangs von der ersten Konfiguration zur zweiten Konfiguration durchgeführt wird, falls die bestimmte Neigung größer als ein vorbestimmter Schwellenwert ist.

9. Verfahren zum Management nach einem der Ansprüche 7 oder 8, **dadurch gekennzeichnet, dass** die Neigung des Fahrzeugs durch das Fahrdynamikregelungssystem, mit dem das Fahrzeug ausgestattet ist, bestimmt, insbesondere berechnet wird.

10. Verfahren zum Management nach einem der vorhergehenden Ansprüche, **dadurch gekennzeichnet, dass** im Anschluss an die Durchführung des Schrittes des Übergangs von der ersten Konfiguration zu der zeitweiligen zweiten Konfiguration das Verfahren einen Schritt des Übergangs von der zweiten Konfiguration zur ersten Konfiguration umfasst, der ausgelöst wird, wenn eine vorbestimmte Verzögerungszeit seit dem Beginn der Durchführung des Schrittes des Übergangs von der ersten Konfiguration zur zweiten Konfiguration vergangen ist oder wenn während der zweiten Konfiguration das Drehmoment, das von dem wenigstens einen Antriebsmotor am Abtrieb geliefert wird, größer als ein vorbestimmter Schwellenwert wird.

11. Verfahren zum Management nach einem der vorhergehenden Ansprüche, **dadurch gekennzeichnet, dass** das wenigstens eine Zubehörteil aus der folgenden Liste ausgewählt ist: ein Klimakompressor, ein Wechselstromgenerator, eine abkoppelbare Wasserpumpe.

12. Kraftfahrzeug, welches die Software und Hardware zur Durchführung des Verfahrens nach einem der vorhergehenden Ansprüche umfasst.

## Claims

1. Method for the management of a motor vehicle comprising at least one driving engine having an output shaft which is coupled with the drive train of the vehicle and drives same, the management method including a step of switching from a first configuration in which at least one accessory separate from the drive train is coupled with, and driven by, said output shaft, to a second temporary configuration in which said at least one accessory is disconnected from said output shaft, the management method being **characterized in that** the second configuration is implemented during a phase for increasing the torque output by said at least one driving engine.

2. Management method according to Claim 1, **characterized in that** in the second temporary configuration, said at least one accessory is mechanically decoupled from said output shaft and is not driven by the latter.

3. Management method according to Claim 1, **characterized in that** in the second temporary configuration, said at least one accessory is deactivated electrically.

4. Management method according to any one of Claims 1 to 3, **characterized in that** it includes a step of pressing on an accelerator pedal of the vehicle associated with a request for vehicle acceleration from rest, corresponding to going from a phase in which the vehicle is stopped at zero speed to a phase in which the vehicle starts moving, said pressing step triggering said phase for increasing the torque output by said at least one driving engine.

5. Management method according to any one of the preceding claims, **characterized in that** the phase for increasing the torque output by said at least one driving engine includes the torque delivered going from zero to a value corresponding to the maximum torque that said at least one driving engine can deliver.

6. Management method according to any one of the preceding claims, **characterized in that** said at least one driving engine comprising an internal combustion engine in which the intake gas is supercharged by at least one turbocharger, the phase for increasing the torque delivered comprises a first phase during which the increase in the torque delivered is created solely by the internal combustion engine and during which the turbocharger is in an inactive state and a second phase during which the increase in the torque delivered is created jointly by the internal combustion engine and the turbocharger, which is in an active state, and **in that** the step of switching from the first configuration to the second configuration is implemented during all or part of said first phase and during all or part of said second phase.

7. Management method according to any one of the preceding claims, **characterized in that** it includes a step of determining the slope of the road on which the vehicle is located, the slope determined having an influence on the implementation of the step of switching from the first configuration to the second configuration.

8. Management method according to Claim 7, **characterized in that** the step of switching from the first configuration to the second configuration is implemented if the slope determined is greater than a predetermined threshold value.

9. Management method according to either of Claims 7 and 8, **characterized in that** the slope of the vehicle is determined, in particular is calculated, by the dynamic stability control system with which the vehicle is fitted.

10. Management method according to any one of the preceding claims, **characterized in that** following the implementation of the step of switching from the first configuration to the second temporary configuration, the method comprises a step of switching from the second configuration to the first configuration triggered when a predetermined time delay has elapsed since beginning the implementation of the step of switching from the first configuration to the second configuration or when, during the second configuration, the torque output by said at least one driving engine exceeds a predetermined threshold.

11. Management method according to any one of the preceding claims, **characterized in that** said at least one accessory is selected from the following list: an air conditioning compressor, an alternator, a disengageable water pump.

12. Motor vehicle comprising the software and hardware for implementing the method according to any one of the preceding claims.
